# EUROPEAN PATENT SPECIFICATION

(11) **EP 1 880 844 B1**
(45) Date of publication and mention of the grant of the patent: **13.07.2011**
(21) Application number: 06732645.4
(22) Date of filing: 12.05.2006
(51) Int. Cl.: B32B 27/32, B41M 5/382, B41M 5/50, B41M 5/52

(54) **BIAXIALLY STRETCHED MULTILAYER POLYPROPYLENE FILM AND USE THEREOF**
BIAXIAL GESTRECKTE MEHRSCHICHTIGE POLYPROPYLENFOLIE UND VERWENDUNG DAVON
PELLICULE DE POLYPROPYLÈNE MULTICOUCHE À EXTENSION BIAXIALE ET SON UTILISATION

(30) Priority: 13.05.2005 JP 2005140943
(43) Date of publication of application: 23.01.2008
(73) Proprietor: Tohcello Co., Ltd., Tokyo 104-0031 (JP)
(72) Inventor: Honda, Hiroshi c/o Tohcello Co., Ltd., Koga-shi, Ibaraki; 3060213 (JP); Tsukada, Chikara c/o Oji Paper Co., Ltd., Tokyo; 1358558 (JP); Kubo, Naoki c/o Oji Paper Co., Ltd., Tokyo; 1358558 (JP); Shimizu, Yoshihiro c/o Oji Paper Co., Ltd., Tokyo; 1358558 (JP)
(74) Representative: Harrison, Ivor Stanley
(86) International application number: PCT/JP2006/309985
(87) International publication number: WO 2006/121217

(56) References cited:
- JP-A- 03 187 742
- JP-A- 2000 127 303
- JP-A- 2003 063 151
- JP-A- 2004 306 319
- JP-A- 2004 314 378
- JP-A- 2004 345 289
- JP-A- 2006 192 889
- JP-B2- 2 516 639

## Description

### FIELD OF THE INVENTION

The present invention relates to a biaxially oriented laminated polypropylene film suitable as a support for an image receiver that has a low density and excellent surface smoothness, obscuring properties, surface gloss, anti-blocking properties and laminate suitability and uses thereof.

### BACKGROUND ART

Biaxially oriented polypropylene films (hereinafter referred to as "OPP film") are widely used in various fields, for example, as a packaging material due to its excellent transparency, mechanical strength, rigidity etc. As a method of improving the hiding powers of as well as imparting surface gloss to OPP films, there has been proposed a biaxially oriented film in which a non-compatible material such as an organic material including a nylon resin or an inorganic material including glass beads have been added to the core material of polypropylene, and the surface layer is a non-added polypropylene layer (Japanese Unexamined Patent Publication (Kokai) No. 58-147348, pp. 1-3).

On the other hand, in recent years thermal printers, in particular thermal transfer printers capable of clearly printing full color images are gaining attention. A thermal transfer printer uses a thermal transfer sheet that has a dye layer containing a dye that transfers by subliming or melt-dispersing due to heat and a receiving sheet that has an image receiving layer (hereinafter referred to as "receiving layer") that receives dyes of the above thermal transfer sheet on one side of its film support. The dye layer and the receiving layer are superposed, and then the dye at desired portions of the dye layer is transferred to the receiving layer in a predetermined amount to form an image. In particular, since a dye thermal transfer method that uses dyes having a sublimating property enables the printing of digital images, it is replacing silver halide photography. Also, higher pixel count of digital images is making progress, and thus prints of higher image quality are being sought after. Furthermore, there are demands for higher printing speeds of thermal transfer printers, and more sensitive thermal transfer receiving sheets.

To comply with such demands, there has been proposed a thermal transfer sheet that uses a biaxially oriented polypropylene film having a thermoplastic resin layer that has voids in order to impart a heat insulating property and also a surface centre-line roughness of 0.7 µm or less in order to obtain higher pixel counts (Japanese Unexamined Patent Publication (Kokai) No. 63-222891, page 3; Japanese Unexamined Patent Publication (Kokai) No. 7-76186, page 2; Japanese Unexamined Patent Publication (Kokai) No. 7-125453, page 2). EP-A-1142701 also proposes a biaxially oriented film with a biaxially oriented film substrate containing inorganic fine particles such as calcium carbonate, having a surface layer on at least one side thereof which has a three dimensional center-line roughness of 0.3 µm or less and a surface gloss of 80% or more.
However, the surface roughness illustrated in EP-A-1142701 is 0.08 to 0.6 µm and the density of the support is in the range of 0.67 to 0.77 g/cm³, which are insufficient to print digital images of higher pixel count due to recent rapid technological development, and have drawbacks that images tend to be rough and colour density is low. Also when images are printed using a thermal transfer receiving sheet, the image-printed portions of the thermal transfer receiving sheet may dent due to heat from the thermal head, thereby deteriorating the appearance. In particular, the denser the density of the printed image is, the larger the dents are, and images having high contrast tend to have marked roughness and very poor appearance. It is also difficult in terms of the manufacturing process to enhance surface smoothness while retaining obscuring properties.

### DISCLOSURE OF THE INVENTION

Thus, it is an object of the present invention to provide: a biaxially oriented laminate polypropylene film that is of low density, that has excellent surface smoothness, obscuring properties, surface gloss, anti-blocking properties, rigidity and heat resistance, and that, when used in image receivers, has few dents due to heat from the thermal head, and that is suitable for obtaining image receivers having an excellent colour density, as well as an image receiver having said biaxially oriented polypropylene film as the support.

The present invention has been proposed in order to achieve the above objective and has the following composition.
(1) A biaxially oriented laminated polypropylene film comprising a biaxially oriented polypropylene film substrate layer (B) made from a propylene-based polymer composition (A) in which an inorganic compound powder (a2) comprising 5 to 25% by mass of calcium carbonate and 3 to 20% by mass of alumina-treated rutile type titanium oxide has been added to 55 to 92% by mass of a propylene-based polymer (al), said powder having a mean particle diameter of 0.5 to 5 µm and an 80% or more cumulative frequency particle diameter of 3 µm or less, said biaxially oriented polypropylene film substrate layer (B) having a front surface layer and a back surface layer on its both sides, both layers being made from the propylene-based polymer (a1), wherein the surface roughness (three-dimensional centre-line roughness SRa) of the front and the back surface layers is 0.01 to 0.07 µm and the gloss value thereof (at an incidence angle of 60 degrees) is 114% or greater, the total light transmittance of the biaxially oriented laminated polypropylene film is 5 to 16%, the density is in the range of 0.40 to 0.65 g/cm³, the L* value is 93 or greater, and the haze value is 90% or greater.
(2) The biaxially oriented laminated polypropylene film according to (1) above, wherein the drawing ratio in terms of plane ratio is in the range of 45 to 65.
(3) The biaxially oriented laminated polypropylene film according to (1) or (2) above wherein a coating layer comprising a polyurethane resin (C) has been formed on the front surface layer made from said propylene-based polymer (a1) on said biaxially oriented laminated polypropylene film.
(4) The biaxially oriented laminated polypropylene film according to (3) above wherein the gloss value (an incidence angle of 60 degrees) is 115% or greater.
(5) The biaxially oriented laminated polypropylene film according to any of (1) to (4) above wherein said biaxially oriented laminated polypropylene film is for a support of a digital photo printing paper.
(6) The biaxially oriented laminated polypropylene film according to (5) above wherein the digital photo printing paper is a printing paper for thermal transfer printing.
(7) An image receiver comprising an image receiving layer on the polyurethane resin layer (C) of a biaxially oriented laminated polypropylene film according to (3) or (4) above.
(8) The image receiver according to (7) above, wherein the image receiving layer is a thermal transfer image receiving layer.

The biaxially oriented laminated polypropylene film of the present invention is specifically excellent as a support for digital photo printing paper, and those forming an image receiving layer on a polyurethane resin layer of the biaxially oriented laminated polypropylene film are especially suitable as an image receiver.

AS can be seen from the Examples that follow, the biaxially oriented laminated polypropylene film of the present invention has a low density, excellent surface smoothness, obscuring properties, surface gloss, anti-blocking properties, rigidity, heat resisting properties and laminate suitability, and is specifically suitable as a support for an image receiver.

Also, compared to conventional thermal transfer receivers, image receivers employing the biaxially oriented laminated polypropylene film of the present invention as the support have characteristics that they can attain a high quality and a high sensitivity, have a high gloss and high post-printing colour density, and reduced dents on the printed image portions, and thus are the most suitable image receivers for the high speed of thermal transfer printers in recent years.

### BEST MODE FOR CARRYING OUT THE INVENTION

The present invention will now be explained in further detail.

### [Propylene-based polymer composition (A)]

The propylene-based polymer composition (A) is a composition in which an inorganic compound powder (a2) has been added to a propylene-based polymer (a1). It is biaxially oriented to form a biaxially oriented polypropylene film substrate layer (B).

The amount of the inorganic compound powder (a2) to be added in the propylene-based polymer composition (A) varies depending on the degree of haze, the total light transmittance and the density of the biaxially oriented laminated polypropylene film obtained within the range of from 8 to 45% by mass, and preferably an amount of 10 to 35% by mass may be adopted.

By adding this inorganic compound powder (a2) to a propylene-based polymer (a1), the obscuring properties, density, haze and total light transmittance of the biaxially oriented polypropylene film substrate layer (B) may be suitably adjusted.

By using calcium carbonate and titanium oxide in combination, a biaxially oriented laminated polypropylene film having a density of 0.40 to 0.65 g/cm³, more preferably 0.45 to 0.60 g/cm³, a haze of 90% or more, preferably 91 to 94%, and a total light transmittance of 5 to 16% may be obtained.

To the propylene-based polymer composition (A) of the present invention, in addition to the inorganic compound powder (a2), various additives known to be generally added to polyolefines such as a heat-resistant stabilizer, a weather-resistant stabilizer, an ultraviolet ray absorber, a lubricant, a slipping agent, a nucleating agent, an anti-blocking agent, an antistatic agent, an anti-fogging agent, a pigment and a dye may be added within the range that does not hamper the purpose of the present invention.

### <Propylene-based polymer (a1)>

The propylene-based polymer (a1) constituting the biaxially oriented polypropylene film substrate layer (B) of the present invention and the front and back surface layers is a polyolefin resin that is generally manufactured and sold under the trade name of polypropylene, and is a homopolymer with a density of 0.890 to 0.930 g/cm³ and a MFR (ASTM D1238, a load of 2160 g, a temperature of 230°C) of 0.5 to 60 g/10 minutes, preferably 0.5 to 10 g/10 minutes, more preferably 1 to 5 g/10 minutes, or a random copolymer of propylene and a small amount, for example, 2 mole % or less, of α-olefin, for example ethylene, butene-1, hexene-1 etc.

The propylene-based polymer (a1) may be a composition comprising one or more polymer, for example a composition comprising propylene homopolymer with different molecular weights together with a propylene/α-olefin random copolymer. Among them, propylene homopolymer, or random copolymer comprising other monomer in an amount of up to 1 mole% and having a high isotacticity, in particular propylene homopolymer, is preferred since it yields a biaxially oriented laminated polypropylene film having high rigidity and excellent thermal resistance.

This propylene-based polymer (a1) is blended with the inorganic compound powder (a2) and then biaxially oriented to form a biaxially oriented film substrate layer of the biaxially oriented laminated polypropylene film of the present invention, in which this propylene-based polymer (a1) may be the same or different from the propylene-based polymer (a1) used for the front and back surface layers.

When the propylene-based polymer (a1) is used as the front surface layer and the back surface layer of a biaxially oriented laminated polypropylene film, various additives known to be generally added to polyolefines such as a heat-resistant stabilizer, a weather-resistant stabilizer, an ultraviolet ray absorber, a lubricant, a slipping agent, a nucleating agent, an anti-blocking agent, an antistatic agent, an anti-fogging agent, a pigment and a dye may be added within the range that does not hamper the purpose of the present invention. Among them, the addition of 0.01 to 3.0% by mass, preferably 0.05 to 1.0 % by mass of an anti-blocking agent can provide a biaxially oriented laminated polypropylene film having an anti-blocking property. If the blending amount of the anti-blocking agent is less than 0.01% by mass, the anti-blocking effect of the resultant biaxially oriented laminated polypropylene film is not sufficient; however, if it exceeds 3.0% by mass, not only the surface state of the resultant biaxially oriented laminated polypropylene film worsens, but surface gloss may be lost.

As such an anti-blocking agent, there can be used silica, talc, mica, zeolite, inorganic compound particles such as metal oxides obtained by calcinating metal alkoxides, organic compound particles such as methyl polymethacrylate, a melamine-formalin resin, a melamine-urea resin and a polyester resin each known per se may be used, and among them, silica and methyl polymethacrylate are most preferably used from the viewpoint of the anti-blocking property.

### <Inorganic compound powder (a2)>

By using calcium carbonate and titanium, oxide in combination, a biaxially oriented laminated polypropylene film having a density of 0.40 to 0.65 g/cm³, more preferably 0.45 to 0.60 g/cm³, a haze of 90% or more, preferably 91 to 94% and a total light transmittance of 5 to 16% can be obtained. The above calcium carbonate has a mean particle diameter in the range of 0.5 to 5 µm, preferably 1 to 1.5 µm. The maximum particle diameter thereof is preferably 5 µ or less. The particle diameter of calcium carbonate is one that was measured using a laser diffraction-scattering method.

The blending amount of calcium carbonate and titanium oxide to the propylene-based polymer (a1), relative to 55 to 92% by mass, more preferably 65 to 88% by mass of the propylene-based polymer (a1), is 5 to 25% by mass, more preferably 9 to 23% by mass of calcium carbonate and 3 to 20% by mass, more preferably 3 to 10% by mass of titanium oxide.

If the blending amount of calcium carbonate is less than 5% by mass, the obscuring property of the resultant biaxially oriented laminated polypropylene film may become deteriorated, and if it exceeds 25% by mass, the appearance of the biaxially oriented laminated polypropylene film may be marred. Also, if the blending amount of titanium oxide is less than 3% by mass, the obscuring property of the resultant biaxially oriented laminated polypropylene film may become deteriorated, and if it exceeds 20% by mass, the appearance of the biaxially oriented laminated polypropylene film may be marred.

In the calcium carbonate according to the present invention, calcium carbonate particles with a particle diameter of 3 µm or less preferably accounts for 80% by mass (80% cumulative frequency particle diameter) or more, preferably 90% by mass (90% cumulative frequency particle diameter) or more of the entire calcium carbonate. When calcium carbonate having such a particle diameter distribution and a mean particle diameter is used, the size of voids due to calcium carbonate particles in the film becomes uniform, and thus a film that has an even obscuring strength and an excellent whiteness can be obtained, and furthermore a film having little convexoconcave with the maximum width of 50 µm or more, for example in which the number of convex portions is 50 (per A4 size) or less, preferably 10 (per A4 size) or less, and most preferably 0 (per A4 size) can be obtained.

In order to obtain a film that has a uniform size of voids in the film and an excellent obscuring strength and whiteness, the moisture of the calcium carbonate used is preferably 0.5% by mass or less. The moisture of calcium carbonate is a value measured according to JIS K 5101.

Furthermore, for the calcium carbonate of the present invention, the particle surface may be treated with higher fatty acids, preferably higher fatty acids having 10 to 28 carbon atoms. By treating the particle surface with such higher fatty acids, the appearance of contraries, fish-eye, etc., due to the secondary aggregation of calcium carbonate can be prevented, and thus a biaxially oriented laminated.polypropylene film having an excellent appearance can be obtained.

As higher fatty acids, specifically, saturated higher fatty acids [CH₃(CH₂)₃COOH, n= 8-26] such as decanoic acid, undecanoic acid, lauric acid, tridecyl acid, myristic acid, pentadecyl acid, palmitic acid, heptadecyl acid, stearic acid, nonadeconoic acid, arachidonic acid, behenmic acid, lignoceric acid, cerotic acid and heptacosanoic acid, and unsaturated higher fatty acids such as oleic acid (cis), elaidic acid (trans), setoleic acid, erucic acid (cis), brassidic acid (trans), linoleic acid, linolenic acid and arachidonic acid may be mentioned, and among them, saturated higher fatty acids, specifically stearic acid is preferred.

The above titanium oxide preferably has a mean particle diameter in the range of 0.01 to 0.5 µm. Titanium oxide, also termed as titanium white, is divided into a rutile type and anatase type, and the rutile type is preferred since it has an excellent hiding power. Also when the titanium oxide of the present invention of which surface has been alumina-treated is used, the resultant biaxially oriented laminated polypropylene film has an excellent appearance, and a thermal transfer receiving sheet employing a biaxially oriented laminated polypropylene film having a L* value of 93 or greater not only yields a quality appearance, but, when recording images with gradations, yields gradations more clearly, and thus is preferred. The L* value is measured through ten sheets of films stacked on plain paper using Spectro Eye (manufactured by GRETAG MACBETH). The particle diameter of titanium oxide is measured by a light scattering method.

### [Polyurethane resin (C)]

The polyurethane resin (C) of the present invention constitutes a coating layer formed on the front surface layer comprising a propylene-based polymer (a1) of the biaxially oriented laminated polypropylene film substrate layer (B) defined in the above invention (5) which is a preferred embodiment of the present invention, and there can be mentioned dry laminates comprising polyurethanes generally known as adhesives for film, aqueous dry laminates, solventless laminates, polyester polyurethanes manufactured as electron beam-curable laminates adhesives, polyether polyurethanes, polyurethane polyurea resins or the like. Such polyurethane resins may be either the aqueous dispersion type or the solvent type, but the aqueous dispersion type resins are preferred because of ease of regulating the degree of crosslinking of the polyurethane resin coating layer and from the viewpoint of working environment at the factory.

As the aqueous dispersion type polyurethane resins, self-emulsifying polyurethane resins in which hydrophilic groups such as carboxylates (-COONa etc.) and sulfonates (-SO₃Na etc.) have been introduced into the main chain or the side chain of the polyurethane resins are preferred. In the case of the solvent type, isocyanate resins are used as the crosslinking agent to form polyurethanes having a three dimensional structure, whereas in the case of the aqueous dispersion type which are mostly linear polyurethane or polyurethane polyurea resins, about 3 to 10% by mass of crosslinking agents of melamine resins, epoxy resins, imine resins etc. may be added to the polyurethane resins, or about 0.5 to 1% by mass of acid catalysts may be added to promote curing reactions. Such crosslinking agents not only enhance water resistance and anti-solvent properties of highly adhesive coatings, but contribute to enhancing adhesive properties.

Furthermore, in the case of the aqueous dispersion type polyurethane resins except for the solvent type polyurethane resins, the presence of antifoaming agents or emulsifying agents in the ingredients may cause whitening of the surface of the biaxially oriented laminated polypropylene film leading to poor appearance. Also, to the polyurethane resins (C) of the present invention, inorganic fine particles, organic fine particles, etc., may be added, as needed for the purpose of preventing blocking, etc.

### [Biaxially oriented laminated polypropylene film]

The biaxially oriented laminated polypropylene film of the present invention is a biaxially oriented laminated polypropylene film comprising a biaxially oriented polypropylene film substrate layer (B) made from a propylene-based polymer composition (A) in which an inorganic compound powder (a2) has been added to a propylene-based polymer (a1), said biaxially oriented polypropylene film substrate layer (B) has a front surface layer and a back surface layer on its both sides, both layers are made from the propylene-based polymer (a1). The surface roughness (three-dimensional center-line roughness SRa) of the surface layer and the back surface layer is 0.01 to 0.07 µm, the gloss value (at an incidence angle of 60 degrees) is 114% or greater, preferably 114 to 130%, the L* value is 93 or greater, the total light transmittance of the laminated polypropylene film is 5 to 16%, the density is in the range of 0.40 to 0.65 g/cm³, preferably 0.45 to 0.60 g/cm³, and a haze value is in the range of 90% or greater.

The surface roughness of the front surface layer is associated with gloss, and when the biaxially oriented laminated polypropylene film with a surface roughness of 0.08 µm or greater is used as a support of a thermal transfer receiver, an uneven surface may result, which may form regions in which ink transfer is insufficient due to an uneven surface, and hence an uneven gradation of images may result, and if the gloss is less than 114%, gloss of recorded images like that of silver halide photography cannot be obtained and dull-hued images may be formed. Also, in the case of a biaxially oriented laminated polypropylene film having a surface roughness of the back surface layer of 0.08 µm or greater or a gloss (an incidence angle of 60 degrees) of less than 114%, when used by being laminated on a core material substrate, the surface roughness and gloss (an incidence angle of 60 degrees) of the front surface layer generally is more susceptible to the effect of the back surface layer as the thickness of the film becomes thinner, so that the image uniformity, gloss, image evenness, etc. of the printed portion may become insufficient. If the total light transmittance exceeds 20%, the color of the substrate layer described below may appear on the surface. If the density exceeds 0.65 g/cm³, the color density may become low, whereas for a film having a density of less than 0.40 g/cm³, shaping may be extremely unstable so that breakage during drawing and variability in physical properties along the direction of width may occur and a uniformly oriented film cannot be obtained.

The thickness of the biaxially oriented laminated polypropylene film of the present invention may be variably determined depending on the use, and is not specifically limited, but generally the thickness of the substrate layer is in the range of 10 to 100 µm, preferably 15 to 50 µm, that of the front surface layer is in the range of 0.5 to 15 µm, preferably 2 to 10 µm, that of the back surface layer is in the range of 0.5 to 15 µm, preferably 1 to 10 µm, and that of the entire layers is in the range of 10 to 130 µm, preferably 25 to 55 µm. When the thickness of the front surface layer and the back surface layer is less than 0.5 µm, the surface roughness of the biaxially oriented laminated polypropylene film may not be kept at less than 0.08 µm. The roughness of the front surface layer of the present invention is a value of a mean roughness (the mean roughness of the three dimensional center plane, SRa) determined by measuring with a three dimensional surface roughness measuring instrument SE-30KS and an analyzer TDA-21 manufactured by KOSAKA LABORATORY LIMITED If the thickness of the back surface layer is less than 0.5 µm, the resulting film will have poor thermal resistance, the film may be broken during drawing, and thus an oriented film with stable physical properties may not be obtained.

One or both sides of the biaxially oriented laminated polypropylene film of the present invention may be subjected, as needed, to surface treatment such as a corona treatment and a flame treatment. In order to impart a heat-sealing property, a film comprising a random copolymer of a high-pressure low density polyethylene, a linear low density polyethylene, a crystalline or low-crystalline ethylene and an α-olefin having 3 to 10 carbons, a random copolymer of propylene and ethylene or an α-olefin having 4 or more carbons, a low melting point polymer such as polybutene and ethylene/vinyl acetate copolymer or a composition thereof may be laminated on the back surface layer of the film. Furthermore, in order to enhance adhesiveness with other materials, the surface of an oriented film may be anchor-treated with an adhesive such as an imine and a urethane, or maleic anhydrous denatured polyolefin may be laminated.

The biaxially oriented laminated polypropylene film of the present invention can be obtained by a method comprising the steps of providing a multi-layered sheet by coextruding and forming a propylene-based polymer composition (A) intended for the substrate layer, a propylene-based polymer (a1) intended for the front surface layer and a propylene-based polymer (a1) intended for the back surface layer in a process known per se, and then drawing the sheet at a planar magnification (longitudinal direction × lateral direction) of 45 to 65 times, preferably 50 to 60 times in a biaxial orientation film forming method such as a simultaneous biaxial orientation method or a successive biaxial orientation method.

When the planar magnification is less than 45 times, the rigidity and the thermal resistance of the back surface layer comprising a propylene-based polymer (a1) cannot be enhanced, and when the resultant biaxially oriented laminated polypropylene film is used as a support, the density of the biaxially oriented polypropylene film substrate layer (B) tends to be too high. Specifically, when used as an image receiver, the biaxially oriented laminated polypropylene film is seldom used alone, and thus a thermoplastic resin film substrate or a core material such as a paper substrate comprising cellulose pulp as a main ingredient is adhered to the back surface of the biaxially oriented laminated polypropylene film via an adhesive layer, and used as a support for image receiving layers by imparting an appropriate thickness and firmness adapted for the digital photo printer. When a biaxially oriented laminated polypropylene film is adhered to the above core material, the density of the biaxially oriented laminated polypropylene film may tend to become too high due to heat applied to the adhesive etc. and pressure at the time of adhering. On the other hand, a biaxially oriented laminated polypropylene film having a planar magnification exceeding 65 times may cause the breakage of the film during drawing and thus oriented films with stable quality may not be obtained.

A method of forming the biaxially oriented laminated polypropylene film of the present invention is explained with reference to a specific example of producing by a successive biaxial orientation method, in which the film is obtained by drawing longitudinally at a temperature of 70 to 140°C, preferably 90 to 120°C, in the range of 4.5 to 7.5 times, preferably 5 to 7 times, and then laterally at a temperature of 120 to 190°C, preferably 140 to 180°C, in the range of 7 to 12 times, preferably 8 to 11 times, and at a planar magnification (longitudinal direction × lateral direction) of 45 to 65 times, preferably 50 to 60 times, followed by thermoplastic at a temperature in the range of 110 to 180°C, preferably 125 to 170°C.

If the longitudinal orientation temperature is less than 70°C, the multi-layered sheet may not be uniformly orientated; however if it exceeds 140°C, it may be difficult to form voids in the film. Also, if the longitudinal orientation magnification is less than 4.5 times, the multi-layered sheet may not be uniformly orientated, and if it exceeds 7.5 times, film-forming may decrease.

If the lateral orientation temperature is less than 120°C, the multi-layered sheet may not be uniformly orientated, and on the other hand if it exceeds 190°C, it may be difficult to form voids in the film. Also, if the lateral orientation magnification is less than 7 times, the multi-layered sheet may not be uniformly orientated, and if it exceeds 12 times, film-forming may decrease.

Furthermore, if the thermoplastic temperature is less than 110°C, curls may be formed reducing the processing suitability when the biaxially oriented laminated polypropylene film is used as the support for digital photo printer paper, and if it exceeds 180°C, it may be difficult to form voids in the film.

Another preferred embodiment of the present invention is a constitution defined in the above invention (5) wherein a coating layer comprising a polyurethane resin (C) has been laminated on the front surface layer made from said propylene-based polymer (a1) on said biaxially oriented laminated polypropylene film.

The surface roughness (three-dimensional center-line roughness SRa) of the coating layer of the biaxially oriented laminated polypropylene film in which the coating layer comprising said polyurethane resin (C) has been formed is less than 0.08 µm, preferably 0.01 to less than 0.07 µm, and the gloss value (an incidence angle of 60 degrees) is 115% or greater, preferably in the range of 115 to 130%, and preferably the L* value is 93 or greater. By setting the surface roughness and the gloss value of the coating layer comprising a polyurethane resin (C) at such ranges, post-image printing gloss can be enhanced to form quality images and post-image printing dents can be decreased in a thermal transfer receiving sheet using said biaxially oriented laminated polypropylene film.

Also, by having a coating layer comprising a polyurethane resin (C), the anti-blocking properties of the resulting coating layer and the back surface layer of the biaxially oriented laminated polypropylene film can be improved.

The thickness of such a biaxially oriented laminated polypropylene film may be variably determined depending on the use, and is not specifically limited, and generally the thickness of the substrate layer is in the range of 10 to 100 µm, preferably 15 to 50 µm, that of the front surface layer is in the range of 0.5 to 15 µm, preferably 1 to 10 µm, that of the back surface layer is in the range of 0.5 to 15 µm, preferably 1 to 10 µm, that of the coating layer is in the range of 0.1 to 3 µm, preferably 0.3 to 2 µm, and that of the entire layer is in the range of 10 to 130 µm, preferably 25 to 55 µm.

In order to coat (laminate) a polyurethane resin (C) on the front surface layer of a biaxially oriented laminated polypropylene film, an aqueous solution or a dispersion of the polyurethane resin (C) is applied using a coater known per se such as an air knife coater, gravure coaters such as a direct gravure coater, a gravure offset coater, an arc gravure coater, a gravure reverse and jet nozzle type, a reverse roll coater such as a top field reverse coater, a bottom field reverse coater and a nozzle field reverse coater, a five-roll coater, a lip coater, a bar coater, a bar reverse coater, a die coater etc. to an amount of the composition contained in the aqueous solution of the polyurethane resin of 0.1 to 20 g/m², preferably 0.3 to 2 g/m², and then dried at a temperature of 50 to 140°C for 10 seconds to obtain the film.

In order to laminate a polyurethane resin (C) on the front surface layer of a biaxially oriented laminated polypropylene film, polyisocyanate, polyethyleneimine, acrylpolyol, etc., may be applied as an anchoring agent on the front surface layer. In order to laminate a polyurethane resin on the front surface layer of a biaxially oriented laminated polypropylene film, the polyurethane resin layer may be laminated (applied) on the front surface layer after obtaining a biaxially oriented laminated polypropylene film, or the polyurethane resin layer may be laminated (applied) on the surface of a multi-layered sheet obtained by coextruding and forming a propylene-based polymer (a1) intended for the substrate layer, a propylene-based polymer (a1) intended for the front surface layer and a propylene polymer (a1) intended for the back surface layer followed by biaxial orientation. Furthermore, after a polyurethane resin layer was laminated (applied) on the front surface layer of an orientated film obtained by longitudinally drawing a multi-layered sheet formed by coextrusion, it may be laterally drawn to make a biaxially oriented laminated polypropylene film.

The biaxially oriented laminated polypropylene film of the present invention is specifically suitable as a support for image receivers. For example, it may be preferably used as a support for digital photo printing papers, preferably thermal transfer print papers (referred to as a thermal transfer receiver or receiving sheet). When the biaxially oriented laminated polypropylene film of the present invention is preferably used for thermal transfer receivers, the biaxially oriented laminated polypropylene film may be used alone as the support. However, when the biaxially oriented laminated polypropylene film is used alone, the low resilience (rigidity) of the film may deteriorate the traveling property of the printing paper during printing with a thermal transfer printer, and thus in order to avoid this, it is preferably a multi-layer structured support having the biaxially oriented laminated polypropylene film as the surface substrate layer.

### <Image receiver>

Preferably, image receivers usually have a thickness of 100 to 300 µm. If the thickness is less than 100 µm, mechanical strength may be insufficient and rigidity may be low, resulting in poor quality as a printing paper. Also, if the thickness exceeds 300 µm, a decrease in the roll length of a rolled receiving sheet in the printer may be caused, or, when attempting to house a predetermined length of the rolled sheet, a volume increase of a digital photo printer may be needed, thus making it difficult to reduce printer size, or the rigidity of receiving sheets may become too high, and thus problems such as hampering the travel during printing in a digital photo printer may arise.

In the case of a multi-layer structured support, from the viewpoint of preventing curling etc., a three-layered structure comprising the biaxially oriented laminated polypropylene film of the present invention as the surface substrate, as well as a core material layer and a back surface substrate layer, is preferred. As the core material layer, there can be mentioned a thermoplastic resin film substrate and a paper substrate comprising cellulose pulp as the main component, and, as thermoplastic resin film substrates, there can be specifically mentioned thermoplastic resin films comprising as the main component thermoplastic resins of polyolefin such as polyethylene and polypropylene, polyester such as polyethylene terephthalate and polybutylene terephthalate, polyamide, polyvinyl chloride, polystyrene and the like. As a paper substrate comprising cellulose pulp as the main component, there can be mentioned papers comprising cellulose pulp as the main component such as woodfree paper, coated paper, art paper, cast coated paper, laminate paper having a thermoplastic resin layer such as a polyolefin resin on at least one side thereof, synthetic resin-impregnated paper, emulsion-impregnated paper, synthetic rubber latex-impregnated paper, synthetic resin-added paper, foaming paper containing thermally expandable particles, and sheet paper comprising cellulose pulp as the main component.

Also, as the back surface substrate layer, the above thermoplastic resin film substrates are mentioned, and when much importance is attached to the curl of the image receiving sheet, it is preferred to use a biaxially oriented laminated polypropylene film of the present invention. In the case of a multi-layer structured support, from the viewpoint of preventing curling etc., a three-layered structure is preferred comprising a biaxially oriented laminated polypropylene film of the present invention as the surface substrate, a substrate layer, and a back surface substrate layer, and there can be illustrated a method of laminating (superposing) the front surface substrate layer and the back surface substrate layer, sandwiching the core material layer, by a known technology such as wet laminating, extrusion laminating, dry laminating and wax laminating.

Among these methods, generally the dry laminating method or the extrusion laminating method is preferably used. As adhesives for the dry laminating method, adhesives of polyester, polyether, polyurethane, etc., is used. For the extrusion lamination method, polyolefine resins of polyethylene, polypropylene and the like may be used as the adhesive. The multi-layer structured support as claimed in the present invention may be a structure in which a first substrate layer comprising a biaxially oriented laminated polypropylene film of the present invention, an adhesive layer, a release layer and a second substrate layer have been sequentially laminated, and supports having a so-called sticker or seal type structure may also be used. Alternatively, a back surface layer may be provided on the back side of the second substrate.

One example of layer constitution of the image receiver of the present invention is an image receiver consisting of receiving layer/[biaxially oriented laminated polypropylene film: polyurethane resin (C) coating layer/front surface layer (a1)/biaxially oriented polypropylene film substrate layer (B)/back surface layer (a1)]/core material layer. Another example that may be illustrated is an image receiver comprising receiving layer/[biaxially oriented laminated polypropylene film: polyurethane resin (C) coating layer/front surface layer (a1)/biaxially oriented polypropylene film substrate layer (B)/back surface layer (a1)]/core material layer/[biaxially oriented laminated polypropylene film: front surface layer (al)/biaxially oriented polypropylene film substrate layer (B)/back surface layer (a1)]. The image receiver of the present invention may be provided in a sheet form or a roll form, which may be selected depending on use.

The receiving layer in the image receiver of the present invention is provided on a (multi-layer structured) support via an intermediate layer or directly. The receiving layer of the present invention may comprise a dye-dyeable resin as the main component, and, as needed, a paint in which one or more than one of a crosslinking agent, an anti-fusing agent (a lubricant, a releasing agent etc.), an ultraviolet ray absorber, a colored pigment, a colored dye, a fluorescent whitening agent, a plasticizing agent, an antioxidant, an inorganic pigment, etc., has been added as appropriate may be applied on the surface of the intermediate layer or the sheet-form support, which is dried and then crosslinked to form the receiving layer.

As a dye-dyeable resin for use in the receiving layer of the present invention, a resin that has a good affinity with dyes and a high dye-dyeable property may preferably be used. As such a resin, there can be mentioned a polyester resin, a polycarbonate resin, a polyvinyl chloride resin, a vinyl chloride-vinyl acetate copolymer resin, a polyvinyl acetal resin, a polyvinyl butyral resin, a polystyrene resin, a polyacrylic acid ester resin, a cellulose derivative resin such as cellulose acetate butyrate, a thermoplastic resin such as a polyamide resin, an activated energy beam-curable resin and the like. These resins preferably have functional groups (e.g., a hydroxyl group, an amino group, a carboxyl group and an epoxy group) that are reactive to the used crosslinking agent.

The receiving layer of the present invention may be crosslinked by a crosslinking agent. As crosslinking agents, the chemical reaction-type crosslinking agents that cure or polymerize in a chemical reaction are preferred. As the chemical reaction-type crosslinking agents, there can be mentioned an additive reaction type such as epoxy compounds and isocyanate compounds, a thermosetting type such as resole, a moisture curing type such as 2-cyanoacrylic acid esters and alkyl titanates, a condensation reaction type such as urea, and the like.
As the chemical reaction-type crosslinking agents, crosslinking agents of isocyanate compounds and epoxy compounds may preferably be used. The amount blended of the crosslinking agent is preferably 1 to 30% by mass at a blending ratio relative to the total solid of the receiving layer. Also, it is preferred that a fusion-preventing agent be contained in this receiving layer in order to prevent fusion between the receiving sheet and the ink sheet during the printing step.

As fusion-preventing agents, there can be used releasing agents or lubricating agents, and for example one or more silicone resins such as a denatured silicone oil including amino-denatured, hydroxy-denatured and carboxy-denatured silicone oils, a non-denatured silicone oil and a silicone acrylic resin, a prepolymer of a denatured silicone oil and an isocyanate compound, a silicone compound, a fluorine compound, a fatty acid ester compound and a phosphate ester compound. As the ultraviolet ray absorber, there can be used a benzotriazole, benzophenone, phenylsalicylate and cyanoacrylate ultraviolet ray absorbing compounds.

These various additive components for the receiving layer may induce a crosslinking reaction. These additives may be mixed with the main component of the receiving layer and coated. They may be coated as another coating layer over and/or under the receiving layer. Furthermore, the solid coating amount of this receiving layer is generally adjusted to the range of 1 to 12 g/m², preferably 3 to 10 g/m². If the solid coating amount of the receiving layer is less than 1 g/m², the receiving layer may not completely cover the surface of the support, which may induce decreased image quality or cause fusion-troubles that result in adhesion of the receiving layer and the ink sheet due to heat from the thermal head. On the other hand, if the solid coating amount exceeds 12 g/m², the effect becomes saturated, which is not only not economical, but the strength of the receiving layer becomes insufficient and thus the thickness of the receiving layer increases so that the insulating effect of the support may not be fully exhibited and the density of images may decrease.

The image receiver of the present invention may have an intermediate layer mounted between the sheet-form (multi-layer structured) support and the receiving layer in order to improve the adhesiveness of the (multi-layer structured) support and the receiving layer or the antistatic property when the image receiver is used as a roll receiving sheet. As resins that may be used for the formation of this intermediate layer, various hydrophilic resins and hydrophobic resins may be used, and there can be used, for example, vinyl polymers such as polyvinyl alcohol and polyvinyl pyrrolidone and derivatives thereof, polymers containing acrylic groups such as polyacrylamide, polydimethyl acrylamide, polyacrylic acid and salts thereof, polymers containing acrylic groups such as polyacrylic acid esters, polymers containing methacrylic groups such as polymethacrylic acid and polymethacrylic acid esters, polyester resins, polyurethane resins, and resins of starch, denatured starch, cellulose derivatives such as carboxymethyl cellulose.

To the above intermediate layer, there can be further added, as needed, various adjuvants such as an antistatic agent, a crosslinking agent, a thickener, a lubricant, a releasing agent, an antifoaming agent, a wetting agent, a leveling agent and a brightening agent. As the antistatic agent, a conductive agent such as a conductive resin and a conductive inorganic pigment may be added. As the conductive resin, there are cationic, anionic and nonionic conductive resins, and among them the cationic conductive resins are preferably used. As the cationic conductive resins, there can be mentioned polyethyleneimine, acrylic polymers containing cationic monomers, cation-denatured acrylamide polymers and cationic starch and the like. As the crosslinking agent, the above isocyanate crosslinking agent, an epoxy crosslinking agent etc. may preferably be added in order to enhance the water-resistant property and solvent-resistant property of the intermediate layer.

Preferably, the solid coating amount of the above intermediate layer is generally in the range of 0.2 to 5 g/m², preferably 0.5 to 3 g/m². If the solid coating amount is less than 0.2 g/m², the effect of improving adhesiveness as the intermediate layer may not be sufficient, and, on the other hand, if the solid coating amount exceeds 5 g/m², the blocking effect or operability may become aggravated.

To the image receiver of the present invention, a rear layer may be provided on the back surface layer (the side opposite to that on which the receiving layer has been provided) of the (multi-layer structured) support. Such a rear layer comprises, as the main component, a resin effective as an adhesive, and may contain a crosslinking agent, an antistatic agent, a fusion-preventing agent, an inorganic and/or organic pigment and the like.

For the above rear layer, a resin for forming the rear layer effective as an adhesive may be used. This resin is effective for enhancing the adhesiveness of the rear layer and the (multi-layer structured) support, preventing scratches of the surface of the receiving layer, preventing the transfer of a dye into the rear layer in contact with the receiving layer surface. As such a resin, there can be used an acrylic resin, an epoxy resin, a polyester resin, a phenol resin, an alkyd resin, an urethane resin, a melamine resin, a polyvinylacetal resin and the like, and a cured product thereof. Also on the rear layer, in order to enhance the adhesiveness of the sheet-form support and the rear layer, there can be blended, as appropriate, a crosslinking agent of the above-mentioned polyisocyanate compound or the epoxy resin in the coating solution of the rear layer.

Also, to the above rear layer, an antistatic agent such as a conductive resin and a conductive inorganic pigment may be added in order to prevent static electricity. As the conductive resin, there are cationic, anionic and nonionic conductive resins, and among them the cationic conductive resins are preferably used. As the cationic conductive resin, there can be specifically mentioned polyethyleneimine, acrylic polymers containing cationic monomers, cation-denatured acrylamide polymers and cationic starch and the like. As the conductive inorganic pigment, there can be mentioned an inorganic pigment on which a compound semiconductor pigment such as an oxide and/or a sulfide has been coated.

To the above rear layer, as needed, a friction coefficient-controlling agent such as an organic and/or inorganic filler, a fusion-preventing agent such as a lubricant and a releasing agent may be blended. As the organic filler, there can be mentioned a nylon filler, a cellulose filler, a urea resin filler, a styrene resin filler, a polyacrylic acid filler and the like, and as the inorganic filler, there can be mentioned silica, barium sulfate, kaolin, clay, talc, heavy calcium carbonate, precipitated calcium carbonate, titanium oxide, zinc oxide and the like. As the fusion-preventing agent, there can be mentioned a nondenatured and denatured silicone oil, a silicone compound such as a silicone block copolymer and a silicone rubber, a phosphate compound, a fatty acid ester compound, a fluorine compound and the like. Furthermore, a conventionally known antifoaming agent, a dispersing agent, a colored pigment, a fluorescent dye, a fluorescent pigment, an ultraviolet-ray absorbing agent and the like may be selected as appropriate.

The solid coating amount of the rear layer is generally in the range of 0.3 to 10 g/m², preferably 1 to 8 g/m². If the solid coating amount of the rear layer is less than 0.3 g/m², the effect of preventing scratches when the receiving layer was rubbed may not be fully exhibited, and coating defects may occur leading to the enhanced surface electric resistance value. On the other hand, if the solid coating amount exceeds 10 g/m², the higher effect may not be obtained, i.e. the effect is saturated and it is not economical. Also after images were printed on the receiving layer by a thermal transfer method, an image protecting layer may be formed on the image receiver of the present invention. The image protecting layer may be formed, for example, by the so-called thermal transfer method in which an image protecting layer for thermal transfer is provided on a thermal transfer sheet and the image protecting layer for thermal transfer is transferred by heating, or a sticking method in which the substantially transparent sheet is stuck and laminated on the thermal transfer image and the like.

Each coating layer of the present invention may be formed by coating with a known coater such as a bar coater, a gravure coater, a comma coater, a blade coater, an air knife coater, a gate roll coater, a die coater, a curtain coater, a lip coater and a slide heat coater, and then by drying.

### Examples

The present invention will be described below in more detail with reference to the following examples to which, however, the invention is not limited unless it exceeds the technological idea. The "%" and "parts" used in the examples are all "% by mass" and "parts by mass" unless otherwise specified and except when they refer to solvents.

### <Evaluation of physical values>

The physical values in Examples and Comparative Examples were determined according to the following evaluation methods.

### (1) Surface roughness (µm)

The three dimensional center-line roughness SRa was measured using a three dimensional surface roughness measuring instrument (SE-30KS manufactured by KOSAKA LABORATORY LIMITED) and an analyzer (TDA-21 manufactured by KOSAKA LABORATORY LIMITED).

### (2) Gloss (%)

It was measured at an incidence angle of 60 degrees in accordance with JIS K 7105 by using a gloss meter (model VGS-1D-300A, manufactured by NIPPON DENSHOKU KOGYO K.K.).

### (3) Haze (%)

The haze of a biaxially oriented laminated polypropylene film was measured in accordance with JIS K 7105 by using a haze meter (model NDH-300A, manufactured by NIPPON DENSHOKU KOGYO K.K.).

### (4) Density (g/cm³)

It was calculated by measuring the thickness and weight per m² of the film.

### (5) Light transmittance (%)

The light transmittance of a biaxially oriented laminated polypropylene film was measured in accordance with JIS K 7105 by using a haze meter (model NDH-300A, manufactured by NIPPON DENSHOKU KOGYO K.K.).

### (6) Blocking strength (N/20 mm)

A biaxially oriented laminated polypropylene film was cut into strips of 20 mm × 100 mm, the front surface layer and the back surface layer were superposed, a load of 250 g/cm² was applied at around its center, and allowed to stand in a 55°C oven for 24 hours, and then using a tension testing machine (manufactured by TOYO SEIKI K.K.) the shear detachment strength of the test strip was measured and it was set as a blocking strength.

### (7) Hue (-)

On a plain paper, ten sheets of biaxially oriented laminated polypropylene films were superposed, and the L* value was measured using the Spectro Eye (manufactured by GRETAG MACBETH) .

### (8) The number of salients on the surface (the appearance of film) [per A4 (210 mm × 297 mm)]

The surface of a biaxially oriented laminated polypropylene film of a A4 size was observed with the naked eye, the number of salients exceeding 50 µm was counted, and evaluated as follows (there were no surface salients exceeding 100 µm in any film).
⊚ : 0, a clean appearance, substantially no problems.
○ : 1 to 10, substantially no problems.
Δ : 11 to 50, but usable.
× : As many as over 51 or more, a poor appearance, cannot be used as a film for the image receiver.

### <Example 1>

### <Substrate layer: Propylene polymer composition layer>

Propylene homopolymer (PP-1): melting point: 162°C, MFR: A composition in which at 2g/10 minutes, 1000 ppm of tetrakis[methylene-3-(3',5'-di-t-butyl-4'-hydroxyphenyl)propionate]methane (product of NIHON CIBA-GEIGY K.K., trade name "IRGANOX 1010") and 1000 ppm of calcium stearate (manufactured by NOF Corporation) were added as the thermal resistant stabilizers;

A composition in which a calcium carbonate powder [mean particle diameter: 1.2 µm, maximum particle diameter: 5 µm, 90% cumulative frequency particle diameter: 2.5 µm, moisture content: 400 ppm or less (measured by Karl Fischer method at 200°C)] were previously kneaded into a propylene homopolymer (PP-1), and a composition in which a rutile-type titanium dioxide [mean particle diameter: 0.2 µm, moisture content: 400 ppm or less (measured by Karl Fischer method at 200°C)] that had been previously alumina-treated was kneaded into a propylene homopolymer (PP-1) were dry-blended to prepare a propylene-based polymer composition (A-1) containing 76.5% of the propylene homopolmer (PP-1), 19.5% of calcium carbonate and 4.0% of titanium dioxide.

### <Front surface layer and back surface layer: Propylene polymer layer>

Propylene homopolmer (PP-2): melting point: 162°C, MFR: A propylene-based polymer in which at 2.4g/10 minutes, 1000 ppm of tetrakis[methylene-3-(3',5'-di-t-butyl-4'-hydroxyphenyl)propionate]methane (product of NIHON CIBA-GEIGY K.K., trade name "IRGANOX 1010") and 1000 ppm of calcium stearate (manufactured by NOF Corporation) were added as the thermal resistant stabilizers were prepared.

### <Production of a biaxially oriented laminated polypropylene film>

A propylene-based polymer as the front surface layer and the back surface layer and a propylene-based polymer composition (A-1) as the substrate layer were prepared, each of which was extruded using a screw extruder using a melt extrusion multi-manifold type T-die to an extrusion ratio of the front surface layer/the substrate layer/the back surface layer (2/17.5/1), and was quickly cooled on a cooling roll to obtain a multi-layered sheet with a thickness of about 1.5 mm. The sheet was heated at 110°C and drawn along the flow direction (longitudinal direction) of the film by 5.2 times. This 5.2 times-drawn sheet was heated at 160°C, and drawn along a direction (lateral direction) perpendicular to the flow direction of the film by 10 times (planar magnification: 52 times) to obtain a biaxially oriented laminated polypropylene film having a thickness of the substrate layer: 35 µm, a thickness of the front surface layer: 4 µm and a thickness of the back surface layer: 2 µm (a total thickness: 41 µm). The front surface layer and the back surface layer of the biaxially oriented laminated polypropylene film were subjected to a corona treatment. The physical properties of the biaxially oriented laminated polypropylene film obtained were measured by the methods described above.

The evaluation results are shown in Table 1.

### <Example 2>

Except that the extrusion ratio of the front surface layer/the substrate layer/the back surface layer was set at (1/8.5/1), the method of Example 1 was followed to obtain a biaxially oriented laminated polypropylene film having a thickness of the substrate layer: 34 µm, a thickness of the front surface layer: 4 µm and a thickness of the back surface layer: 4 µm (a total thickness: 42 µm).

The evaluation results are shown in Table 1. <Example 3> A multi-layered sheet obtained in Example 1 with the same extrusion ratio as in Example 2 was heated at 120°C to draw in the flow direction (longitudinal direction) of the film by 5.0 times.
Except that this 5.0 times-drawn sheet was heated at 170°C and drawn along a direction (lateral direction) perpendicular to the flow direction of the film by 10 times (planar magnification: 50 times), the method of Example 1 was followed to obtain a biaxially oriented laminated polypropylene film having a thickness of the substrate layer: 34 µm, a thickness of the front surface layer: 4 µm and a thickness of the back surface layer: 4 µm (a total thickness: 42 µm).

The evaluation results are shown in Table 1.

### <Example 4>

Instead of the propylene-based polymer composition used as the substrate layer in Example 1, a propylene-based polymer composition (A-2) containing 86.0% of a propylene homopolmer (PP-1), 10.0% of calcium carbonate and 4.0% of titanium dioxide was prepared, and except that the extrusion ratio was changed to 1/18/1, the method of Example 1 was followed to obtain a biaxially oriented laminated polypropylene film having a thickness of the substrate layer: 36 µm, a thickness of the front surface layer: 2 µm and a thickness of the back surface layer: 2 µm (a total thickness: 40 µm).

The evaluation results are shown in Table 1.

### <Example 5>

On the front surface layer of the biaxially oriented laminated polypropylene film obtained in Example 1, an isocyanate anchoring composition (manufactured by MITSUI TAKEDA CHEMICAL K.K.; A liquid obtained by mixing at A310:D110N = 3:2, and diluting with methyl ethyl ketone) was applied and dried to laminate a coating of 0.1 g/m² followed by a further application of an aqueous polyurethane (aqueous polyurethane manufactured by MITSUI TAKEDA CHEMICAL K.K.; a 7% aqueous solution with a particle diameter of 100 nm) and drying. A biaxially oriented laminated polypropylene film, laminated thereon a coating of 0.4 g/m² was obtained.

The evaluation results are shown in Table 1.

### <Example6>

On the front surface layer of the biaxially oriented laminated polypropylene film obtained in Example 2, an isocyanate anchoring composition (manufactured by MITSUI TAKEDA CHEMICAL K.K.; A liquid obtained by mixing at A310:D110N = 3:2, and diluting with methyl ethyl ketone) was applied and dried to laminate a coating of 0.1 g/m² followed by a further application of an aqueous polyurethane (aqueous polyurethane manufactured by MITSUI TAKEDA CHEMICAL K.K.; a 7% aqueous solution with a particle diameter of 100 nm) and drying. A biaxially oriented laminated polypropylene film, laminated thereon a coating of 0.4 g/m² was obtained.

The evaluation results are shown in Table 1.

### <Example 7>

On the front surface layer of the biaxially oriented laminated polypropylene film obtained in Example 3, an isocyanate anchoring composition (manufactured by Mitsui Takeda Chemical K.K.; A liquid obtained by mixing at A310:D110N = 3:2, and diluting with methyl ethyl ketone) was applied and dried to laminate a coating of 0.1 g/m² followed by a further application of an aqueous polyurethane (aqueous polyurethane manufactured by MITSUI TAKEDA CHEMICAL K.K.; a 7% aqueous solution with a particle diameter of 100 nm) and drying. A biaxially oriented laminated polypropylene, laminated thereon a coating of 0.4 g/m² was obtained.

The evaluation results are shown in Table 1.

### <Example 8>

On the front surface layer of the biaxially oriented laminated polypropylene film obtained in Example 4, an isocyanate anchoring composition(manufactured by MITSUI TAKEDA CHEMICAL K.K.; A liquid obtained by mixing at A310:D110N = 3:2, and diluting with methyl ethyl ketone) was applied and dried to laminate a coating of 0.1 g/m² followed by a further application of an aqueous polyurethane (aqueous polyurethane manufactured by Mitsui Takeda Chemical K.K.; a 7% aqueous solution with a particle diameter of 100 nm) and drying. A biaxially oriented laminated polypropylene film, laminated thereon a coating of 0.4 g/m² was obtained.

The results of the evaluation are shown in Table 1.

### <Comparative Example 1>

Instead of the propylene-based polymer composition (A-1) used as the substrate layer in Example 1, a propylene-based polymer composition containing 91.3% of the propylene homopolmer (PP-1) used in Example 1, 4.7% of calcium carbonate powders and 4.0% of a rutile-type titanium dioxide was used, and except that the extrusion ratio of the front surface layer/the substrate layer/the back surface layer was set at (1/8/1), the method of Example 3 was followed to obtain a biaxially oriented laminated polypropylene film on which a coating was laminated.

The evaluation results are shown in Table 1.

### <Comparative Example 2>

Instead of the propylene-based polymer composition used in the back surface layer in Example 1, a polyolefin polymer composition (PEC) that has blended therein 10% of a high density polyethylene (MFR: 0.33 g/10 min, density: 0.964 g/cm³, melting point: 132°C), 30% of a high pressure method low density polyethylene (MFR: 0.35 g/10 min, density: 0.919 g/cm³, melting point: 109°C) and 60% of a propylene-ethylene block copolymer (MFR: 20 g/10 min, ethylene content: 12 mole%, melting point: 153°C) was prepared. A polyolefin polymer composition that has blended 3000 ppm of the above-mentioned thermal resistance stabilizer in this resin composition was used, and except that the extrusion ratio of the front surface layer/the substrate layer/the back surface layer was set at (1/18/1), the method of Example 3 was followed to obtain a biaxially oriented laminated polypropylene film on which a coating was laminated.

The evaluation results are shown in Table 1.

### <Example 9>

### <Production of a support>

Using the biaxially oriented laminated polypropylene film produced in Example 1 as the front substrate layer and the rear substrate layer, and using an art paper (OK KINFUJI N127.6 g/m², manufactured by OJI PAPER CO., LTD) as the core material layer, the back surface layer side of each film was laminated and stuck on both sides of the substrate layer in a dry laminating method using a urethane adhesive to obtain a three-layered support.

### <Formation of a rear layer>

On one side of the above support, a rear layer coating liquid-1 of the following composition was coated to a coating amount of solid to 3 g/m², and dried to form a rear layer.

| | |
|---|---|
| Rear layer coating liquid-1 Polyvinyl acetal resin (trade name: S-LEC KX-1 manufactured by SEKISUI CHEMICAL CO.,LTD.) | 35 parts |
| Polyacrylic acid ester resin (trade name: JURYMER AT613, manufactured by NIHON JUNYAKU CO., LTD.) | 25 parts |
| Nylon resin particles (trade name: MW330, manufactured by SHINTO PAINT CO., LTD.) | 10 parts |
| Zinc stearate (trade name: Z-7-30, manufactured by CHUKYO YUSHI CO., LTD) | 20 parts |
| Cationic conductive resin (trade name: Chemistat 9800, manufactured by SANYO CHEMICAL INDUSTRIES, LTD) | 10 parts |
| Water/isopropyl alcohol = 2/3 (mass ratio) mixture | 400 parts |

### <Formation of an intermediate layer>

On the surface of the support obtained as above, an intermediate layer coating liquid-1 having the following composition was coated to a coating amount of solid to 1 g/m², and dried to form an intermediate layer.

| | |
|---|---|
| Intermediate layer coating liquid-1 Acrylic acid ester resin (trade name: SAR615A, CHUO RIKA KOGYO K.K.) | 50 parts |
| Cationic conductive resin (trade name: Chemistat 9800, manufactured by SANYO CHEMICAL INDUSTRIES, LTD) | 50 parts |
| Water/isopropyl alcohol = 2/3 (mass ratio) mixture | 400 parts |

### <Production of a thermal transfer receiver: formation of a receiving layer>

Then, on the above intermediate layer, a receiving layer coating liquid-1 having the following composition was coated to a solid coating amount of 5 g/m², and dried.

### Receiving layer coating liquid-1

| | |
|---|---|
| Polyester resin (trade name: VYLON 200, manufactured by TOYOBO CO., LTD.) | 100 parts |
| Silicone oil (trade name: KF101, manufactured by Shin-Etsu Chemical Co., Ltd.) | 3 parts |
| Polyisocyanate (trade name: Takenate D-140N, MITSUI CHEMICALS POLYURETHANES, INC.) | 5 parts |
| Toluene/methyl ethyl ketone = 1/1 (mass ratio) mixture | 300 parts |

The thermal transfer receiver was wound in a roll form around a core with an outer diameter of 170 mm with the coated surface of the receiving layer facing the inner side, which was immediately packaged in a moistureproof package, and allowed to stand in a heat treatment chamber controlled at a temperature of 50°C and a relative humidity of 30% for five days to conduct the crosslinking of the receiving layer so as to produce a sheet-form thermal transfer receiver.

### <Example 10>

Except that the formation of the support was changed as described below in the method of Example 9, the method of Example 9 was followed to produce a sheet-form thermal transfer receiver.

### <Formation of a support>

Using the biaxially oriented laminated polypropylene film produced in Example 6 as the surface substrate layer and the biaxially oriented laminated polypropylene film produced in Example 5 as the rear layer, an art paper (trade name: OK KINFUJI N127.6 g/m², manufactured by OJI PAPER CO., LTD) as the core material layer was stuck as the substrate layer in between them using an urethane adhesive to obtain a three-layer structured support in a dry laminating method.

### <Comparative Example 3>

Except that the formation of the support was changed as described below, the method of Example 9 was followed to produce a sheet-form thermal transfer receiver.

### <Formation of a support>

Using the biaxially oriented laminated polypropylene film produced in Comparative Example 1 as the front surface substrate layer and the rear surface substrate layer, an art paper (trade name: OK KINFUJI N127.6 g/m², manufactured by OJI PAPER CO., LTD) was stuck as the core material layer in between them using an urethane adhesive to obtain a three-layer structured support in a dry laminating method.

### <Comparative Example 4>

Except that the formation of the support was changed as described below, the method of Example 9 was followed to produce a sheet-form thermal transfer receiver.

### <Formation of a support>

Using the biaxially oriented laminated polypropylene film produced in Comparative Example 2 as the front surface substrate layer and the rear surface substrate layer, an art paper (trade name: OK KINFUJI N127.6 g/m², manufactured by OJI PAPER CO., LTD) was stuck as the core material layer in between them using an urethane adhesive to obtain a three-layer structured support in a dry laminating method.

### Evaluation

Using the thermal transfer receiver obtained in each the above-mentioned Examples and Comparative Examples, each of the following items was evaluated according to the methods described below. The evaluation results are shown in Table 2.
Gloss: Gloss of each thermal transfer receiver was measured at an incidence angle of 60 degrees in accordance with JIS Z 8741 by using a gloss meter.

Subsequently, each thermal transfer receiver was supplied to a thermal transfer printer (trade name: UP-DR100, manufactured by SONY), and on a polyester film having a thickness of 6 µm, an ink sheet having an ink layer containing each sublimation dye of yellow, magenta and cyan together with an adhesive was contacted with the thermal transfer receiver, and heat controlled in 16 grades was applied thereon using a thermal head so that a predetermined image was thermally transferred to the thermal transfer receiver, and each of halftone monocolor and color-superposed images was printed. The recorded images thus obtained were subjected to the following evaluation.

### (1) Density of the printed image

With respect to each of the recorded image transferred onto the thermal transfer receiver by each of the applied energy, the reflection density was measured using the MACBETH reflectometer (trade name: RD-914, manufactured by KOLLMORGEN). The density of a high gradation grade which ranks at the 15th grade from that obtained by the lowest applied energy was expressed as the density of the printed image.

### (2) Image uniformity

The uniformity of the recorded image at the gradation portion corresponding to an optical density (black) of 0.5 was examined with the naked eye for the presence or absence of uneven shades and white spots.

Those having no uneven shades or white spots and thus substantially no problems were set as O. those having slight uneven shades and white spots were set as Δ , and those having marked uneven shades and white spots and being practically problematic were set as ×.

### (3) Gloss of the image printed portion

For a high gradation grade which ranks at the 15th grade from that obtained by the lowest applied energy, the gloss at an angle of 60 degrees was measured using a gloss meter in accordance with JIS Z 8741.

### (4) Unevenness of images

The thickness of a high gradation grade which ranks at the 15th grade from that obtained by the lowest applied energy and of a no image-printed portion was measured using, a pachymeter in accordance with JIS P 8118, and "grade difference" = "the thickness of the no image-printed portion" - "the thickness of the image-printed portion at grade 15" was calculated to evaluate unevenness based on the following.

Those in which the "grade difference" is 0 to 3 µm and there are substantially no problems were set as ○, those in which the "grade difference" is 3 µm or greater and 8 µm or less and unevenness can be seen were set as Δ , and those in which the "grade difference" is 8 µm or greater and marked unevenness can be seen, and the appearance is bad were set as ×.

### (5) The density of the biaxially oriented laminated polypropylene film of the surface substrate layer in the support

The biaxially oriented laminated polypropylene film of the surface substrate layer was detached from the support, and the density was calculated from the thickness and mass per square meter of the film.

**Table 1**

| | | Ex.1 | Ex.2 | Ex.3 | Ex. 4 | Ex.5 | Ex.6 | Ex.7 | Ex.8 | Ex.9 | Ex. 10 |
|---|---|---|---|---|---|---|---|---|---|---|---|
| Polyurethane laminated layer | | None | None | None | None | Yes | Yes | Yes | Yes | Yes | Yes |
| Front surface layer | PP (mass %) | 100 | 100 | 100 | 100 | 100 | 100 | 100 | 100 | 100 | 100 |
| | Extrusion mass ratio | 2 | 1 | 1 | 1 | 2 | 1 | 1 | 1 | 1 | 2 |
| Substrate layer | PP (mass %) | 76.5 | 76.5 | 76.5 | 86.0 | 76.5 | 76.5 | 76.5 | 86.0 | 91.3 | 76.5 |
| | Ca carbonate | 19.5 | 19.5 | 19.5 | 10.0 | 19.5 | 19.5 | 19.5 | 10.0 | 4.7 | 19.5 |
| | Ti Oxide | 4.0 | 4.0 | 4.0 | 4.0 | 4.0 | 4.0 | 4.0 | 4.0 | 4.0 | 4.0 |
| | PP (mass %) | 17.5 | 8.5 | 8.5 | 18 | 17.5 | 8.5 | 8.5 | 18 | 8 | 18 |
| Back surface layer | PP or PEC (mass %) | 100 | 100 | 100 | 100 | 100 | 100 | 100 | 100 | 100 | 100 |
| | PP (mass %) | 1 | 1 | 1 | 1 | 1 | 1 | 1 | 1 | 1 | 1 |
| Haze | (%) | 92.8 | 92.7 | 93.1 | 92.6 | 92.8 | 92.7 | 93.0 | 92.8 | 92.7 | 92.6 |
| Obscuring properties | Light transmittance (%) | 8.1 | 7.8 | 11.6 | 12.1 | 8.2 | 7.8 | 11.5 | 11.9 | 17.4 | 7.5 |
| Gloss of front surface layer (%) | | 122.5 | 126.1 | 116.7 | 120.5 | 124.0 | 125.5 | 116.2 | 119.5 | 117.4 | 122.7 |
| Gloss of back surface layer (%) | | 119.4 | 125.5 | 114.7 | 119.9 | 120.4 | 122.7 | 115.0 | 118.6 | 115.6 | 13.3 |
| Surface roughness of front surface layer | | 0.019 | 0.022 | 0.025 | 0.051 | 0.056 | 0.044 | 0.036 | 0.066 | 0.095 | 0.046 |
| Surface roughness of back surface layer | | 0.065 | 0.026 | 0.039 | 0.053 | 0.059 | 0.037 | 0.035 | 0.058 | 0.102 | 0.479 |
| Density | (g/cm³) | 0.50 | 0.52 | 0.61 | 0.64 | 0.52 | 0.52 | 0.61 | 0.64 | 0.78 | 0.49 |
| Blocking strength | (N/20mm) | 7.1 | 7.0 | 6.8 | 7.0 | 0.6 | 0.5 | 0.2 | 0.2 | 0.7 | 2.6 |
| Film appearance | Visual inspection | ○ | ○ | ○ | ○ | ○ | ○ | ○ | ○ | ○ | ○ |
| Hue | L* | 94.38 | 94.35 | 96.17 | 96.04 | 94.65 | 94.38 | 95.20 | 95.78 | 94.76 | 93.98 |

**Table 2**

| | Work Ex. 9 | Work Ex. 10 | Comp. Ex. 3 | Comp. Ex. 4 |
|---|---|---|---|---|
| Density of printed images | 2.44 | 2.41 | 2.11 | 2.21 |
| Image uniformity | ○ | ○ | × | Δ |
| Gloss of printed portion | 86 | 88 | 67 | 78 |
| Unevenness of images | ○ | ○ | ○ | Δ |
| Film density after being stuck (g/cm³) | 0.51 | 0.54 | 0.79 | 0.68 |

### Industrial Applicability

The biaxially oriented laminated polypropylene film of the present invention has low density and excellent surface smoothness, hiding power, surface gloss, anti-blocking properties, rigidity, thermal resistance and laminate suitability, and thus is suitable not only as a packaging film, but specifically, as a support for image receivers.

Compared to conventional image receivers, an image receiver that employs this biaxially oriented laminated polypropylene film as the support can attain a higher image quality and a higher sensitivity, and has higher gloss and color density after image printing and fewer dents at the printed portions, and therefore is useful as an image receiver.

## Claims

1. A biaxially oriented laminated polypropylene film comprising a biaxially oriented polypropylene film substrate layer (B) made from a propylene-based polymer composition (A) in which an inorganic compound powder (a2) comprising 5 to 25% by mass of calcium carbonate and 3 to 20% by mass of alumina-treated rutile type titanium oxide has been added to 55 to 92% by mass of a propylene-based polymer (a1), said powder having a mean particle diameter of 0.5 to 5 µm and an 80% or more cumulative frequency particle diameter of 3 µm or less, said biaxially oriented polypropylene film substrate layer (B) having a front surface layer and a back surface layer on its both sides, both layers being made from the propylene-based polymer (a1), wherein the surface roughness (three-dimensional centre-line roughness SRa) of the front and the back surface layers is 0.01 to 0.07 µm and the gloss value thereof (at an incidence angle of 60 degrees) is 114% or greater, the total light transmittance of the biaxially oriented laminated polypropylene film is 5 to 16%, the density is in the range of 0.40 to 0.65 g/cm³, the L* value is 93 or greater, and the haze value is 90% or greater.

2. A biaxially oriented laminated polypropylene film according to claim 1, wherein the drawing ratio in terms of planar magnification is in the range of 45 to 65.

3. A biaxially oriented laminated polypropylene film according to claim 1 or claim 2, wherein a coating layer comprising a polyurethane resin (C) has been formed on the front surface layer made from said propylene-based polymer (a1) on said biaxially oriented laminated polypropylene film

4. A biaxially oriented laminated polypropylene film according to claim 3, wherein the gloss value (at an incidence angle of 60 degrees) is 115% or greater.

5. A biaxially oriented laminated polypropylene film according to any one of claims 1 to 4, wherein said biaxially oriented laminated polypropylene film is for a support of a digital photo printing paper.

6. A biaxially oriented laminated polypropylene film according to claim 5, wherein the digital photo printing paper is a printing paper for thermal transfer printing.

7. An image receiver comprising an image receiving layer on the polyurethane resin layer (C) of a biaxially oriented laminated polypropylene film according to claim 3 or claim 4.

8. An image receiver according to claim 7, wherein the image receiving layer is a thermal transfer image receiving layer.

## Patentansprüche

1. Biaxial ausgerichtete laminierte Polypropylenfolie, die eine biaxial ausgerichtete Polypropylenfolienträgerschicht (B) aufweist, die aus einer Polymerzusammensetzung (A) auf Propylenbasis hergestellt ist, bei der ein Pulver einer anorganischen Verbindung (a2), das einen Massenanteil von 5 bis 25 % an Calciumcarbonat und einen Massenanteil von 3 bis 20 % an aluminiumoxidbehandeltem Titanoxid des Rutiltyps beinhaltet, zu einem Massenanteil von 55 bis 92 % eines Polymers auf Propylenbasis (a1) hinzugefügt wurde, wobei das genannte Pulver einen mittleren Teilchendurchmesser von 0,5 bis 5 µm und einen Teilchendurchmesser von 3 µm oder weniger bei einer Summenhäufigkeit von 80 % oder mehr hat, wobei die genannte biaxial ausgerichtete Polypropylenfoliensubstratschicht (B) auf ihren beiden Seiten eine vorderseitige Schicht und eine rückseitige Schicht hat, wobei beide Schichten aus dem Polymer auf Propylenbasis (a1) hergestellt sind, wobei die Oberflächenrauhigkeit (dreidimensionaler Mittenrauhwert SRa) der vorderseitigen und der rückseitigen Schicht 0,01 bis 0,07 µm beträgt und ihr Glanzwert (bei einem Einfallwinkel von 60 Grad) 114 % oder mehr beträgt, der gesamte Lichtdurchlassgrad der biaxial ausgerichteten laminierten Polypropylenfolie 5 bis 16 % beträgt, die Dichte im Bereich von 0,40 bis 0,65 g/cm³ beträgt, der L*-Wert 93 oder mehr beträgt und der Haze-Wert 90 % oder mehr beträgt.

2. Biaxial ausgerichtete laminierte Polypropylenfolie nach Anspruch 1, bei der das Ziehverhältnis bezüglich der flächigen Vergrößerung im Bereich von 45 bis 65 beträgt.

3. Biaxial ausgerichtete laminierte Polypropylenfolie nach Anspruch 1 oder Anspruch 2, bei der auf der vorderseitigen Schicht, die aus dem genannten Polymer auf Polypropylenbasis (a1) auf der genannten biaxial ausgerichteten laminierten Polypropylenfolie hergestellt ist, eine Polyurethanharz (C) beinhaltende Beschichtungsschicht gebildet wurde.

4. Biaxial ausgerichtete laminierte Polypropylenfolie nach Anspruch 3, bei der der Glanzwert (bei einem Einfallwinkel von 60 Grad) 115 % oder mehr beträgt.

5. Biaxial ausgerichtete laminierte Polypropylenfolie nach einem der Ansprüche 1 bis 4, bei der die genannte biaxial ausgerichtete laminierte Polypropylenfolie zum Tragen eines Digitalfotopapiers bestimmt ist.

6. Biaxial ausgerichtete laminierte Polypropylenfolie nach Anspruch 5, bei der das Digitalfotopapier ein Druckerpapier für Thermotransferdruck ist.

7. Bildaufnehmer, der eine Bildaufnahmeschicht auf der Polyurethanharzschicht (C) einer biaxial ausgerichteten laminierten Polypropylenfolie nach Anspruch 3 oder Anspruch 4 beinhaltet.

8. Bildaufnehmer nach Anspruch 7, bei dem die Bildaufnahmeschicht eine Thermotransferbild aufnehmende Schicht ist.

## Revendications

1. Film de polypropylène stratifié à orientation biaxiale comprenant une couche de substrat composée d'un film de polypropylène à orientation biaxiale (B) constituée d'une composition de polymère à base de propylène (A) dans laquelle une poudre de composé inorganique (a2) comprenant de 5 à 25 % en masse de carbonate de calcium et de 3 à 20 % en masse d'oxyde de titane de type rutile traité par alumine a été ajoutée à 55 à 92 % en masse d'un polymère à base de propylène (a1), ladite poudre ayant un diamètre moyen des particules de 0,5 à 5 µm et un diamètre des particules pour une fréquence cumulée de 80 % ou plus de 3 µm ou moins, ladite couche de substrat composée d'un film de polypropylène à orientation biaxiale (B) comportant une couche superficielle avant et une couche superficielle arrière sur ses deux côtés, les deux couches étant constituées du polymère à base de propylène (a1), dans lequel la rugosité de surface (rugosité tridimensionnelle le long de la ligne centrale SRa) des couches superficielles avant et arrière est de 0,01 à 0,07 µm et la valeur de brillant de celles-ci (à un angle d'incidence de 60 degrés) est de 114 % ou plus, la transmittance totale du film de polypropylène stratifié à orientation biaxiale est de 5 à 16 %, la densité est dans l'intervalle de 0,40 à 0,65 g/cm³, la valeur L* est de 93 ou supérieure, et la valeur de trouble est de 90 % ou supérieure.

2. Film de polypropylène stratifié à orientation biaxiale selon la revendication 1, dans lequel le rapport d'étirage en termes d'agrandissement planaire est dans l'intervalle de 45 à 65.

3. Film de polypropylène stratifié à orientation biaxiale selon la revendication 1 ou la revendication 2, dans lequel une couche de revêtement comprenant une résine de polyuréthane (C) a été formée sur la couche superficielle avant constituée dudit polymère à base de propylène (a1) sur ledit film de polypropylène stratifié à orientation biaxiale.

4. Film de polypropylène stratifié à orientation biaxiale selon la revendication 3, dans lequel la valeur de brillant (à un angle d'incidence de 60 degrés) est de 115 % ou supérieure.

5. Film de polypropylène stratifié à orientation biaxiale selon l'une quelconque des revendications 1 à 4, dans lequel ledit film de polypropylène stratifié à orientation biaxiale est destiné à un support de papier d'impression photo numérique.

6. Film de polypropylène stratifié à orientation biaxiale selon la revendication 5, dans lequel le papier d'impression photo numérique est un papier d'impression pour impression par transfert thermique.

7. Récepteur d'image comprenant une couche de réception d'image sur la couche en résine de polyuréthane (C) d'un film de polypropylène stratifié à orientation biaxiale selon la revendication 3 ou la revendication 4.

8. Récepteur d'image selon la revendication 7, dans lequel la couche de réception d'image est une couche de réception d'image par transfert thermique.
